(19) Europäisches Patentamt
European Patent Office
Office européen des brevets

(11) **EP 3 561 381 B1**

(12) **EUROPEAN PATENT SPECIFICATION**

(45) Date of publication and mention
of the grant of the patent:
**31.08.2022   Bulletin 2022/35**

(21) Application number: **18169327.6**

(22) Date of filing: **25.04.2018**

(51) International Patent Classification (IPC):
**F24H 1/12** *(2022.01)*   **F24H 9/1818** *(2022.01)*
**F22D 11/00** *(2006.01)*   **F22D 5/26** *(2006.01)*
**F24H 9/20** *(2022.01)*   **F22B 35/18** *(2006.01)*

(52) Cooperative Patent Classification (CPC):
**F22D 11/003; F22B 35/18; F22D 5/26; F24H 1/121;
F24H 9/1818; F24H 9/2028**

(54) **METHOD FOR CONTROLLING A HEATING SYSTEM COMPONENT FOR A SIMPLE AND SAFE OPERATION AND A HEATING SYSTEM COMPONENT THEREFOR**

VERFAHREN ZUR REGELUNG EINER HEIZUNGSSYSTEMKOMPONENTE FÜR EINEN EINFACHEN UND SICHEREN BETRIEB UND HEIZUNGSSYSTEMKOMPONENTE DAFÜR

PROCÉDÉ POUR COMMANDER UN COMPOSANT DE SYSTÈME DE CHAUFFAGE POUR UN FONCTIONNEMENT SIMPLE ET SÛR ET COMPOSANT DE SYSTÈME DE CHAUFFAGE CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.10.2019   Bulletin 2019/44**

(73) Proprietor: **Bleckmann GmbH & Co. KG
5112 Lamprechtshausen (AT)**

(72) Inventors:
• **HÖFER, Johann
5113 St. Georgen (AT)**
• **PLESCHINGER, Andreas
5205 Schleedorf (AT)**
• **UNTERBERGER, Hubert
5111 Bürmoos (AT)**

• **WINKLER, Jürgen
5164 Seeham (AT)**
• **LEHNER, Ernst
5082 Grödig (AT)**
• **HACKL, Heinz Frederic
5163 Mattsee (AT)**

(74) Representative: **Eisenführ Speiser
Patentanwälte Rechtsanwälte PartGmbB
Postfach 31 02 60
80102 München (DE)**

(56) References cited:
**EP-A1- 2 960 594        EP-A1- 3 260 796
DE-A1-102004 055 850   DE-U1-202012 103 242
US-A1- 2013 327 840     US-A1- 2016 109 152**

**Description**

FIELD OF THE INVENTION

The invention relates to a method for controlling a heating system component for heating fluid media in a heating system of a household appliance. Additionally, the invention relates to a heating system comprising a controller and at least one temperature sensor.

BACKGROUND OF THE INVENTION

For many types of domestic appliances or domestic machines, it is necessary to heat up a fluid medium, such as for example water. Heating up can be caused by means of one or more heating systems. To that extent, a medium circuit can be provided, a pump arranged in the circuit causing circulation of the medium in the circuit.

Basic aspects of such heating systems are that, like all other components of the medium circuit, the system is to take up only a small amount of space and is to be inexpensive to produce. Furthermore, the heating system shall be simple to assemble. Reliable safeguarding of the heating system must be guaranteed upon the occurrence of a critical operating condition which can result in plastic components within the domestic appliance melting or catching fire. In case of some domestic appliances, it may further be necessary to prevent the medium to be heated from exceeding a predetermined temperature. For example, in the case of a dishwashing machine, it may be necessary to prevent the washing water from exceeding its boiling temperature.

US patent application 2006/0236999 discloses a heating system for heating fluid media, in particular for domestic appliances, including a carrier unit, a heating unit arranged on the carrier unit and a heat transfer element which is arranged on the carrier unit and comprises a material which is a good conductor of heat. On the heat transfer element, temperature safety devices are mounted by fixing elements via corresponding through apertures.

A system with two temperature sensors, which are used to switch-off the device when a failure occurs, is disclosed in DE patent application 10 2011 002 861. A similar system is also disclosed in DE patent application 10 2016 215 266.

DE patent application 10 2012 203 715 discloses a system with a pump which comprises safety control for switching-off the pump. This safety control also may switch-off the heating unit when a failure occurs.

Moreover, from EP patent application 3 238 599 a heating unit is known, which comprises an electronic temperature sensing device being arranged thermally conductive with the thermally conductive element to detect and record the temperature of the thermally conductive element over time in order to provide information about the operating condition of the washing machine. The device is used to avoid that a trigger temperature of a fuse is reached.

It is a general object of the manufacture of heating systems and heating system components to provide ever smaller and more compact construction parts, which provide a sufficient heating power (if not the same heating power as before). It is a further object to reduce manufacturing costs.

In addition, when using conventional temperature monitoring and/or control elements (such as, e.g., thermal fuses) with continuous-flow water heaters, there is a problem when the temperature monitoring and/or control elements are fixed with, e.g., one or more screws, to a mounting plate. That is, when the mounting plate is soldered to the heating unit, it may bend. Further, when fastening respective fixing screws on a temperature monitoring and/or control element, the temperature monitoring and/or control element may be lifted from the fixing plate and remain in the air above the hot location. As a consequence, the largest amount of heat in the center of the heating unit cannot be released directly to the temperature monitoring and/or control element, but has to be released via, e.g., the mounting plate, screws, and/or the base plate flange. These effects result in an unacceptable (i.e., too slow) response time of the temperature monitoring and/or control element. Accordingly, it would be advantageous to directly mount a temperature sensor at the position where a certain temperature should be monitored. NTC thermistors are temperature sensors well known in the art. However, the rather inexpensive NTC thermistors may not continuously be exposed to temperatures exceeding 85 to 125°C. Since a heating unit of a heating system component usually reaches temperatures above 100°C, inexpensive NTC thermistors are usually not suitable for being directly mounted to or near the heating unit within the heating system component, thus preventing more compact design.

An object of the present invention is therefore to provide a method for controlling and protecting a heating system component which avoids the shortcomings of prior-art heating systems.

US patent application 2016/0109152 relates to a heating system component for a heating system for heating a fluid medium. The heating system component includes a carrier unit comprising a wet side, wherein said wet side corresponds to a surface of said carrier unit configured to be in contact with said fluid medium; and a heating unit. The heating unit may be coupled to the carrier unit via soldering, laser welding, gluing, ultrasonic welding, and/or friction welding. The carrier unit may comprise aluminum.

EP patent application 2 960 594 relates to a heating system component comprising:

a temperature monitoring and/or control unit comprising a lower surface, and a carrier unit comprising an upper surface. At least a part of said lower surface of said temperature monitoring and/or control unit is in thermal contact with at least a part of said upper surface of said carrier unit. Said lower surface of said temperature monitoring and/or control unit and said upper surface of said carrier unit are attached to each other by means of a welded seam, preferably by means of a laser-welded seam.

EP patent application 3 260 796 relates to a heating system component for a heating system for heating a fluid medium, with a carrier unit, and a heating unit coupled to said carrier unit, wherein said carrier unit comprises a wet side and a dry side, wherein said wet side corresponds to a surface of said carrier unit configured to be in contact with said fluid medium, wherein said dry side is located on a surface opposite to said wet side; and wherein said heating unit is recessed in a groove provided on said dry side of the carrier unit. A temperature sensor, in particular an NTC thermistor, is positioned to measure a temperature of a fluid medium at the wet side of the carrier unit, wherein the temperature sensor is effectively thermally insulated from the heating unit.

DE utility model 20 2012 103 242 describes a device for detecting a failure of a heating apparatus. A heater of the heating apparatus is powered and a sensor detects a rise in temperature. When the sensed value is not within a predetermined range the heater is switched off.

SUMMARY OF THE INVENTION

According to an embodiment of the invention, there is provided a method for controlling a heating system component of a heating system for heating a fluid medium according to claim 1. Said heating system component comprises: a carrier unit; a heating unit coupled to said carrier unit; and a controller; wherein said carrier unit comprises a wet side and a dry side, wherein the wet side corresponds to a surface of said carrier unit configured to be in contact with the fluid medium, wherein the dry side is located on a surface opposite to the wet side. The heating system component further comprises at least one temperature sensor, in particular a NTC thermistor, wherein the temperature sensor is effectively in thermal contact and electrically isolated with at least a part of an upper surface of the dry side of the carrier unit. The method comprises: receiving a starting signal at the controller for starting the heating system component; carrying out a test routine for at least the at least one temperature sensor; and in case the test routine is not successful: entering a safe state of the heating system component.

Due to this method, a safe startup procedure is possible.

If there is no water inside the pump-housing present at the wet side, due to an error in the heating system, excess heating of plastic components could occur. The prior art already uses temperature sensors to monitor the whole component during the entire operation process. The present invention describes the startup procedure and the continuous safety-protection during operation.

Therefore, it is contemplated to carry out at least a test routine for the at least one temperature sensor before the heating system component is started completely. In case the test routine is not successful, a safe state of the heating system component is entered. A safe state in this instance can include that the heating unit will not be supplied with power. For example, a single operating device can be operated, in particular a fuse can be blown or a safety switch (e.g. relay, electronic switch devices) can be switched off, such that no power is supplied to the heating unit of the heating system component. The heating system component or the appliance comprising the heating system component may still stay switched-on, however, preferably outputs a failure signal, e.g. by means of a display showing a failure code. For example, a display of the appliance having the heating system component and carrying out the method could display an appropriate failure code or an instruction for an operator on a display. It could also be contemplated to show instructions how to resolve the problem.

In case the test routine is successful, preferably the startup of the heating system component is completed accordingly.

The heating unit may be any suitable heating unit and may have any suitable form. In a particularly preferred embodiment, the heating unit is recessed in a groove provided on said dry side of the carrier unit. The heating unit in this case is preferably curved and may resemble a C-shape. Further suitable forms comprise pipe heaters, free flow heaters, flat-plate heaters, thick film and thin film technology, rod shaped heating elements and the like.

Preferably, the at least one temperature sensor, in particular a NTC thermistor, is effectively in thermal contact with at least a part of an upper surface of said dry side of the carrier unit, wherein the part of the upper surface of said dry side of the carrier unit is arranged in contact with said fluid medium at the wet side, and preferably wherein the part of the upper side of the carrier unit is effectively thermally coupled to and electrically isolated from the heating unit.

Being effectively in thermal contact with at least a part of an upper surface of said dry side of the carrier unit does require a direct contact of the temperature sensor with the upper surface of the dry side of the carrier unit. However, the effective thermal contact shall be understood as providing a thermal contact which allows a measurement of the fluid medium circulating at the wet side of the carrier unit. Thus, the thermal contact should ensure a major impact on the measured temperature coming from the fluid medium on the wet side of the carrier unit. The temperature sensor may also measure a mix temperature of the fluid and the heating unit. By providing the temperature sensor, in particular a NTC thermistor, effectively in thermal contact with at least a part of an upper surface of said dry side of the carrier unit, wherein said at least part of the upper side of the carrier unit is effectively thermally coupled to the heating unit, it can be ensured that the temperature sensor is not exposed to temperatures exceeding the maximum temperature of the fluid circulated on the wet side of the carrier unit, which in most common household appliances is 85 to 125°C. Up to this temperature, it is possible to use common cost-effective NTC thermistors which further allow a compact design of the heating system component with reduced material budget.

Preferably, the test routine includes: sending a test signal from the controller to said at least one temperature sensor, preferably by using the heating element. The test signal may simply trigger a response of the temperature sensor to test whether this is still active. When a temperature sensor would not be active, a temperature control of the heating system component would not be possible during operation and an excess heating of the heating system component could easily occur. To avoid such a state, it is preferably tested whether the temperature sensor (or temperature sensors) operates in normal state and therefore the test signal by using the heating element is sent to the at least one temperature sensor.

The above step may be carried out without powering the heating unit, or during operation while the heating unit is being powered. In the second case it may be preferred to switch-off the heating unit for a short time and send the test signal while the heating unit is switched-off.

Moreover, the test routine includes: powering the heating unit with a predetermined test power level for a predetermined test time period; obtaining a temperature test value measured by the at least one temperature sensor; and comparing the obtained temperature test value with a predetermined temperature threshold. Preferably, these steps are carried out during operation, e.g. while the hot water is produced. Preferably, the temperature test value is obtained after the predetermined test time period has lapsed. Preferably, the temperature test value is furthermore obtained after an additional delay time (heater off time), after the predetermined test time (heater on time) period has ended. That is, the test time period may be a first time duration, and the temperature test value is obtained after a second time duration, which is longer than the first time duration. This is beneficial, since the heating system component has a certain temperature rise time (equivalent dead time), which depends on system properties, as e.g. size, material, and thermal conductivity of elements.

In the step of comparing the obtained temperature test value with a predetermined temperature threshold, it can be determined whether the heat up process results in a temperature, which is too high for the short predetermined test time period. Thus, when the obtained temperature test value is above the threshold, a dry run failure could be the reason. Therefore, in this case, the test routine is considered not being successful and the safe state is entered. In the opposite case, when it is determined that the obtained temperature test value is below the predetermined threshold, the test routine is considered being successful and the startup of the heating system component can be completed. A normal operating state can be entered.

In a preferred embodiment, the test power level is 100% or less of a maximum power level, preferably 50% or less, particularly preferred 25% or less. When the test power level is set to be relatively high, e.g. 100% of the maximum power level, a quick test result can be achieved. The heating unit is driven by the maximum power level, which is the maximum power level the system is able to supply to the heating unit, and therefore a fast heating process is achieved.

However, setting the test power level to such a high value bears the risk that excess heating of single elements or other adjacent components is caused. Therefore, it is also preferred to set the test power level to 50% or less of the maximum power level. A value of 50%, 25% or less is easily obtainable when the heating unit is powered by an alternating current. Moreover, a value of 25% or less lowers the risk of overshooting.

In a further preferred embodiment, the test power is supplied in a pulsed manner. Pulsing the supplied test power is an effective method for reducing the power level and thus increasing safety of the heating system component. Pulsing the test power in the present case could include phase angle control, leading edge and trailing edge phase control, pulse package control, and/or pulse width modulation. Depending on whether direct current or alternating current is used, different pulsing methods are preferred.

According to a further preferred embodiment, the test routine includes powering the heating unit with a predetermined test power level at a test start time; obtaining a temperature test value measured by the at least one temperature sensor; determining that a predetermined test temperature threshold is reached at a test end time; and comparing a duration from the test start time to the test end time with a predetermined time period threshold. These steps could be carried out as an alternative or an addition to the above referenced steps of the test routine, which include powering the heating unit with a predetermined test power level for a predetermined test time period. In this present alternative, the test time period is variable and the heating unit is at least powered until the test temperature threshold is reached. Thus, in this embodiment, the duration until the temperature threshold is reached is measured. When this duration is relatively long, it is an indicator that water is present at the wet side of the carrier unit. When this time period, on the other hand, is rather short, it is an indicator for no or just some water at the carrier unit and thus an indicator for a risk of running dry. Therefore, when it is determined that the duration from the test start time to the test end time is below a predetermined time period threshold, the test routine is considered to be not successful and a safe state of the heating system component is entered. One benefit of this embodiment is that the temperature sensor can be designed in a simple manner. It is not important that the temperature sensor is able to measure a broad variety of different values; rather, it is sufficient when a temperature sensor is adapted to measure only one value i.e. the test temperature threshold. Moreover, it is possible in both above cases to calculate a gradient, in this case a temperature over time gradient ($\Delta T/\Delta t$) based on which specific actions could be taken.

Preferably, powering is stopped in this embodiment after a predetermined maximum time. Additionally or alternatively, the powering is stopped at the test end time or within short thereafter. Within short thereafter, in the present case could include: within a predetermined time frame after the test end time. This predetermined time frame may be a set absolute duration or a relative duration dependent on the duration from the test start time to the test end time, a measured temperature, or the supply power. Restricting the power in this embodiment to a predetermined maximum time increases safety of the heating system component and prohibits overheating just by the test routine. Moreover, it could be contemplated to stop the powering short thereafter, e.g. within 1 second or 10 seconds after the predetermined test temperature threshold has been reached. This can avoid false signal detection and a verification measurement can be carried out in addition. It may be provided that the test temperature threshold needs to be exceeded for a certain time period to trigger the respective signal. This may avoid false signal detection.

In a further preferred embodiment, the test routine includes: powering the heating unit with a predetermined heat quantity. In this alternative, the heat quantity is kept constant.

Therefore, the method preferably also comprises: in this embodiment, determining a supply voltage of the heating unit; and calculating by the controller a start up supply time necessary to obtain the supply of the predetermined heat quantity. The supply time ts can be calculated from the following equation:

$$ts = W^{\ast}R/U^2; \text{ (eq. 1)}$$

Thus, by knowing the resistance R and by measuring the supplied voltage U, the time ts, which is necessary to reach the predetermined heat quantity (work) W can be determined. This embodiment has the benefit that the supplied heat quantity for carrying out the test routine is always the same. The risk of overheating is reduced.

In a further preferred embodiment, multiple temperature test values are obtained, and the method further comprising the step: calculating a heating curve based on the multiple temperature test values. For calculating the heating curve, it is not necessary that a continuous or quasi-continuous temperature measurement is carried out, rather it is sufficient to obtain a plurality of temperature test values at discrete times. In one embodiment, it is sufficient to only obtain two temperature test values to calculate the heating curve.

Based on such a heating curve, a slope of the heating curve can be determined and the determined slope can be compared with at least a first predetermined slope threshold. In this regard it shall be noted that a relatively high difference quotient of $\Delta T/\Delta t$ is indicative for a fast heating and thus may be indicative for a lack of water at the wet side.

For some embodiments and applications, it is preferred that the heating system component comprises a second temperature sensor distal from said first temperature sensor. For example, the first temperature sensor may be mounted in the so called hot area, close to the heating unit, and the second temperature sensor may be mounted in the cold area, distal to the heating unit. One of the first and second temperature sensors may also be mounted between the hot and the cold area, in the so called mixed area.

It shall be noted that even though NTCs are preferred as temperature sensors, also other known devices could be used, as e.g. SMD-NTCs, thin film thermistors, thermocouples or resistive temperature sensors.

When two temperature sensors are used, for some applications it may be beneficial that the method further comprises: obtaining a second temperature test value measured by said second temperature sensor; and comparing the obtained second temperature test value with a second predetermined temperature threshold. Preferably, also the further steps described above are carried out using the second temperature sensor.

Furthermore, it is possible, that a controller is connected with the at least one temperature sensor via a primary connection and a redundant second temperature sensor by using a redundant connection. Some regulations require a redundant system by using two measuring paths. It is possible to design the system to be redundant. Safety is further increased.

In a further embodiment of the invention, the object stated in the introductory portion is also solved by a heating system component for a heating system for heating a fluid medium, according to claim 13.

A controller is not necessarily directly adjacent to the carrier unit; the controller rather can also be a controller of the heating system or a higher system, e.g. a system of the appliance, which uses the heating system. It could also be provided that the controller is accessible via a network or the internet, in order to read specific temperature sensor values, which are stored in the memory. Moreover, the controller could be accessible via internet to update the software stored on the memory or initiate other actions. Before this action, the temperature sensor data of other various heater units in e.g. dishwashers can be collected also via internet.

Moreover, it shall be understood that the controller comprising the memory, processor and the software code is also claimed herein separately and independently. Furthermore, also the software code, which when carried out on a processor carries out the method of the first aspect of the invention is claimed independently and separately.

In an embodiment, said heating system further comprises a heat conducting plate covering at least a part of the groove, wherein the heat conducting plate comprises a detached portion at a circumferential part detached from the heating unit recessed in the groove, the detached portion has a projecting part extending beyond the groove of the carrier unit, the projecting part is in direct contact with the dry side of the carrier unit; and the temperature sensor is mounted at the projecting part, and wherein the detached portion of the heat conducting plate preferably comprises trenches in radial direction of respective peripheral edges of the projecting part. Preferably, the heating system component may further comprise a second temperature sensor, in particular a NTC thermistor, wherein said second temperature sensor is in thermal contact with an upper surface of the heat conducting plate covering the heating unit inside the groove or direct located on the heating-surface.

In a further embodiment, the temperature sensor is provided inside the groove of the carrier unit shielded from the heating unit by a shielding unit. Preferably, the shielding unit is made of coated steel, stainless steel or an aluminum material. In a further preferable implementation, a second temperature sensor is provided inside the groove shielded from the heating unit by a shielding unit, wherein the resulting temperature is first measured by the first and second raw temperature values and then derived by a mathematic formula (e.g. min, max, average, ...) out of them. In a further preferable implementation, the first and second temperature sensors are NTC thermistor pills cast in epoxy resin between the dry side of the carrier unit and the shielding unit. The compact, yet cost-efficient design provided by this embodiment allows a reliable measurement of the fluid temperature on the wet side of the carrier unit while providing an easy assemble of the heating system component within a respective household appliance. Since the temperature measurement components are provided inside the groove, the risk of damages during assembly is significantly reduced.

In an embodiment, the heating system component further comprises a heat conducting plate covering at least a part of the groove, wherein the heat conducting plate comprises a projecting part extending beyond the groove of the carrier unit, the projecting part being in direct contact with the dry side of the carrier unit; and wherein the temperature sensor is provided at a ceramic pad fixed at a projecting part of the carrier unit. Preferably, a second temperature sensor is positioned on a second ceramic pad, wherein the second ceramic pad is fixed at a position of the heat conduction plate covering the groove. In a further preferable implementation, one or more conductor paths are provided along the heat conduction plate to connect the one or more temperature sensors, wherein the conductor paths are insulated from the heat conduction plate by an insulating layer, preferable comprising a polyimide, such as - but not limited to - Kapton, a polyamide or a polyester.

In a further embodiment, the heating system component further comprises a heat conducting plate covering at least a part of the groove, wherein the heat conducting plate comprises a projecting part extending beyond the groove of the carrier unit, the projecting part being in direct contact with the dry side of the carrier unit; wherein at least a part of the heat conducting plate is covered with an insulating layer on top of which the temperature sensor and conductor paths connected to the temperature sensor are formed. Preferably, the heating system component comprises a plug with pins to be connected to the conductor paths wherein the plug also provides electric connections for the heating unit. Preferably, the temperature sensor, the conductor paths and the insulating layer are formed at the heat conducting plate by printing or thermal spraying. Alternatively, the insulating layer may also be attached directly to a portion of the dry side of the carrier unit. Preferably, the temperature sensor and the conductor paths are formed at the insulating layer before being attached to the carrier unit. The insulating layer may be jointed to a respective plug and afterwards be glued to the carrier unit, wherein the plug may be connected (e.g. welded, soldered, or the like) to the heating unit connection pins and/or the carrier unit.

In a further embodiment, the carrier unit comprises an undercut portion which is covered with a thermoplastic layer doped with a metal-plastic additive directly sprayed at the undercut portion and subsequently metalized at respective portions of an upper surface of the thermoplastic layer; wherein the temperature sensor and conductor paths connected to the temperature sensor are formed at the metalized thermoplastic layer by laser cutting. Preferably, the heating system component comprises a transparent plug comprising the electrical contacts to be connected with the conductor paths leading to the temperature sensor, wherein the transparent plug is coupled with the thermoplastic layer using laser welding.

In an embodiment, the heating system component further comprises a heat conducting plate covering at least a part of the groove, wherein the heat conducting plate comprises a projecting part extending beyond the groove of the carrier unit, the projecting part being in direct contact with the dry side of the carrier unit; wherein at least a part of the heat conducting plate is covered with a thermoplastic layer doped with a metal-plastic additive directly sprayed at least at a part of the projecting part and subsequently metalized at respective portions of an upper surface of the thermoplastic layer; wherein the temperature sensor and conductor paths connected to the temperature sensor are formed at the metalized thermoplastic layer by laser cutting. Preferably, the heating system component comprises a transparent plug comprising the electrical contacts to be connected with the conductor paths leading to the temperature sensor, wherein the transparent plug is coupled with the thermoplastic layer using laser welding.

It shall be understood that a preferred embodiment of the invention can also be any combination of the dependent claims or above embodiments with the respective independent claim.

It has to be noted that the present invention can also be used in conjunction with quartzite heaters, flow through heaters, flat plate heaters, thick film and thin film heaters.

These and other aspects of the invention will be apparent from and elucidated with reference to the embodiments described hereinafter.

## BRIEF DESCRIPTION OF THE DRAWINGS

In the following drawings:

**Fig. 1** shows schematically and exemplarily an embodiment of a heating system component;

**Figs. 2a and 2b** show schematically and exemplarily cross-section views of the heating system component according to Fig.1;

**Fig. 3** shows schematically and exemplarily an embodiment of a method for controlling a heating system component;

**Fig. 4** shows schematically and exemplarily an embodiment of a controller;

**Fig. 5a** shows schematically and exemplarily a first diagram of a heating process;

**Fig. 5b** shows schematically and exemplarily a second diagram of a heating process;

**Figs. 6a and 6b** show schematically and exemplarily a further embodiment of a heating system component;

**Fig. 7** shows schematically and exemplarily a further embodiment of a heating system component;

**Figs. 8a and 8b** show schematically and exemplarily a further embodiment of a heating system component;

**Figs. 9a and 9b** show schematically and exemplarily a further embodiment of a heating system component;

**Fig. 10** shows schematically and exemplarily a further embodiment of a heating system component;

**Figs. 11a to 11c** show schematically and exemplarily a further embodiment of a heating system component; and

**Fig. 12** shows schematically and exemplarily possible temperature measuring points on a heating system component.

## DETAILED DESCRIPTION OF EMBODIMENTS

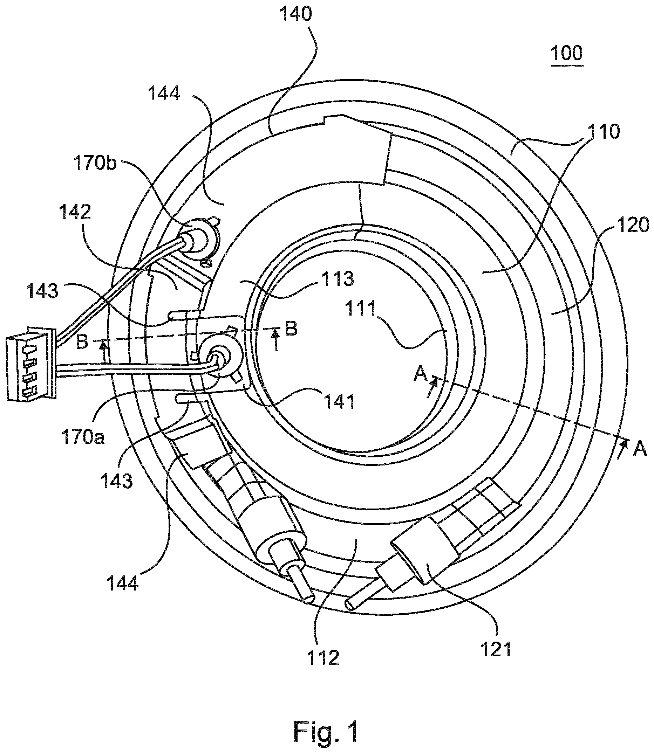

**Fig. 1** shows schematically and exemplarily an embodiment of a heating system component 100. Heating system component 100 comprises a carrier unit 110 and a heating unit 120.

Heating system component 100 may be connected to, e.g., a conveyor pump of a domestic appliance such as - but not limited to - a dishwashing machine. Heating system component 100 can be attached to the conveyor pump or to a conveyor pump housing during assembly of the domestic appliance. In another example, heating system component 100 can form a pre-assembled structural unit together with the conveyor pump.

As can be seen from **Fig. 1,** carrier unit 110 is a circular disc. In concentric relationship with its central axis (not shown), carrier unit 110 has a circular hole 111, through which a suction pipe of the conveyor pump is passed in sealing integrity in relation to the medium. At its outer peripheral edge, carrier unit 110 may engage over the edge of the conveyor pump's housing in sealing integrity in relation to the medium. That backside of carrier unit 110, as shown in **Fig. 1,** is in direct contact with the medium to be heated in the installed condition of the pump and can therefore be referred to as the wet side 101, whereas the side of carrier unit 110 shown in **Fig. 1** does not come into contact with the medium and can thus be referred to as the dry side 102.

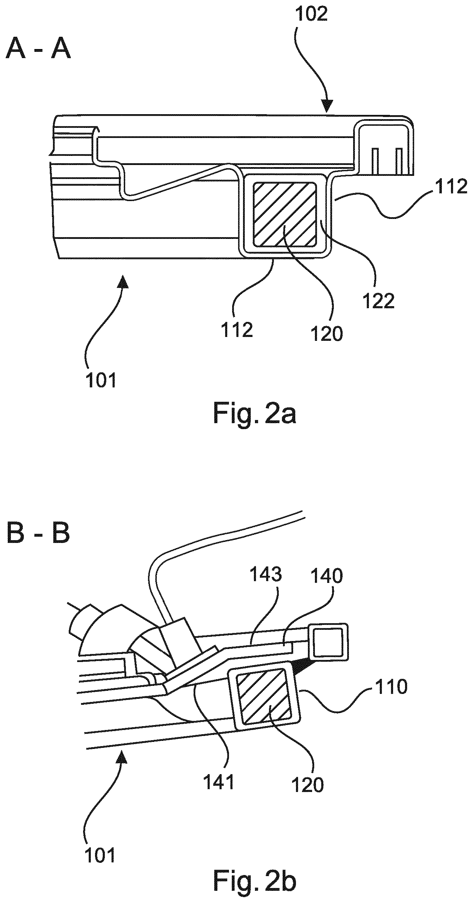

Heating unit 120 is arranged on dry side 102 of carrier unit 110 as shown in **Fig. 2a** illustrating the cross sectional view along line A-A in **Fig. 1.** Heating unit 120 is coupled to carrier unit 110 by means of a coupling step. The coupling step may comprise any one of a soldering step, a laser welding step, a gluing step, an ultrasonic welding step, and/or a friction welding step.

Carrier unit 110 may comprise a composite material. The composite material comprises at least an aluminum layer and a stainless steel layer. The stainless steel layer is arranged on wet side 101 of carrier unit 110. The aluminum layer is arranged on dry side 102 of carrier unit 110. In an example, the composite material may be produced by means of a cold roll bonding process.

In the embodiment illustrated in **Fig. 1,** carrier unit 110 further comprises groove 112. Groove 112 is configured to receive heating unit 120. Heating unit 120 comprises a first cross section which is perpendicular to an axial direction of heating unit 120. The first cross section may have a rectangular shape, a hat-like trapezoid with rounded edges, a bell-like trapezoid with rounded edges.

In the embodiment illustrated in **Fig. 1,** a cross section of groove 112 corresponds to said first cross section of heating unit 120. In particular, heating unit 120 is arranged in groove 112 as shown in **Fig. 2a.** The cross section of groove 112 and the cross section of heating unit 120 are chosen such that at least a part of a surface of heating unit 120 and a part of said dry side 102 form a flat face. In **Fig. 2a** all three sides of heating unit 120 are welded or soldered to the surfaces of groove 112 of carrier unit 110. The necessary close contact between the surfaces of heating unit 120 and carrier unit 110 may be achieved by applying a press preload to heating unit 120 during the coupling step. Optionally, a thermally conducting paste 122 may be applied to one or both of the surfaces of carrier unit 110 and heating unit 120. By employing a thermally conducting paste, problems associated with an occurrence of voids between carrier unit 110 and heating unit 120 may be avoided.

Another possibility for addressing problems associated with an occurrence of voids between carrier unit 110 and heating unit 120 is to arrange a phase change compound between carrier unit 110 and heating unit 120. Such a compound changes its phase state above its phase change temperature and is thereby able to fill cracks, voids, slits, etc. In an embodiment, the phase change compound is applied to the surfaces of carrier unit 110 and/or heating unit 120 by means of a dispensing step. Dispensing typically implies that the phase change compound dries within a short period of time.

In the embodiment illustrated in **Fig. 1,** heating system component 100 further comprises a temperature sensor 170a, preferably a NTC (Negative Temperature Coefficient) thermistor, connectable to a processing unit of the domestic appliance and in particular to a controller 30 as explained below in order to measure the temperature of the fluid circulating on the wet side of the heating system component 100. NTC thermistors provide a cost effective way of determining the temperature. However, such common inexpensive NTC thermistors only sustain continuous operation in a temperature regime of up to 100°C. Since heating unit 120 usually reaches temperatures above 100°C, NTC thermistor 170a must be thermally shielded from heating unit 120 in order to ensure a certain durability while avoiding to use more expensive NTC thermistors which sustain higher temperatures. Therefore, heating unit 120 is covered by a heat conducting plate 140 at an outer circumferential part of carrier unit 110 covering groove 112. Heat conducting plate 140 may comprise a projecting part 141 extending towards an inner circumferential part 113 of carrier unit 110. This projecting part 141 is in direct contact with the dry side 102 of carrier unit 110. Since at the opposite side of carrier unit 110, wet side 101, the fluid is circulated in operation, the temperature of carrier unit 110 and thus the temperature of projecting part 141 of heat conducting plate 140 approximately reflects the temperature of the fluid. In order to measure the fluid temperature, NTC thermistor 170a is thus mounted at projecting part 141 of heat conducting plate 140. In order to control the heat transfer from heating unit 120 to projecting part 141 on which the NTC is mounted, heat conducting plate 140 may provide a detached portion 142 at an outer circumferential part above heating unit 120 under the same angle as projecting part 141 extends towards the centre. **Fig. 2b** shows a cross sectional view along the line B-B in **Fig. 1. Fig. 2b** shows that there is a space between detached portion 142 of heat conducting plate 140 and heating unit 120. Projecting part 141 is in contact with detached portion 142, but is declined towards the upper surface of carrier unit 110. Preferably, the angular expansion of detached portion 142 is slightly broader than the angular expansion of projecting part 141. Heat conducting plate 140 may additionally be provided with trenches 143 at detached portion 142 provided towards both sides of the angular expansion of detached portion 142, wherein the length of trenches 143 influences the amount of heat conducted from non-detached portion 144 of heat conducting plate 140 to the projecting portion 141.

Optionally, a second NTC thermistor may be provided, either at a further detached portion 142 in order to determine the fluid temperature, such that the first and second NTC thermistor measurements can be averaged in order to increase the liability. Alternatively, second NTC thermistor 170b may be mounted at non-detached portion 144 of heat conducting plate 140 in order to determine the temperature of heating unit 120 itself to prevent, for instance, that the pump is running dry. In the latter case, an NTC thermistor sustaining the resulting temperatures reachable by heating unit 120 must be chosen.

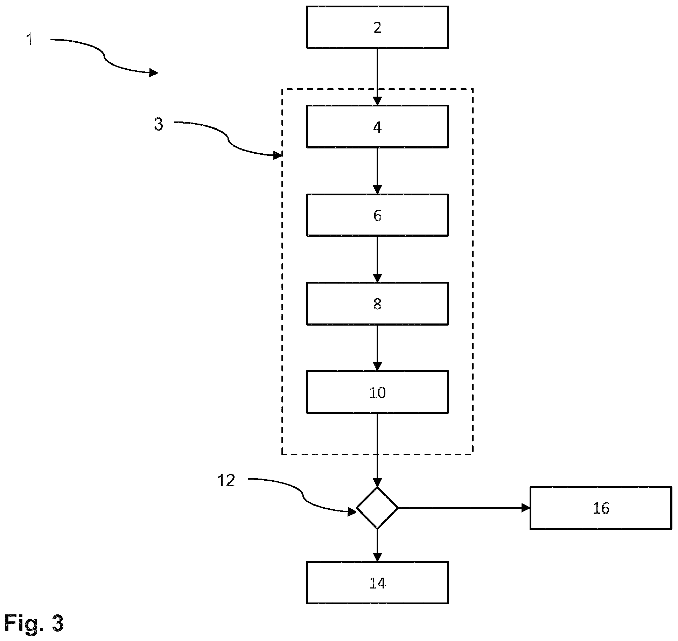

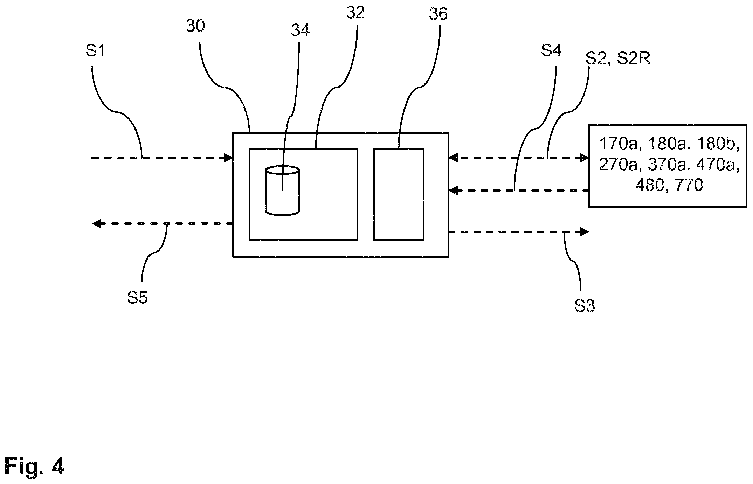

When heating unit 120 is powered, it might happen that there is no water present at wet side 101, which could result in a quick overheating of the heating system component. According to the present invention, the at least one temperature sensor 170a, 180a, 270a, 370a, 460, 470a, 480, 770 is used to determine whether the heating system component is overheating or if a safe operation is possible. In this regard, **Fig. 3** illustrates a method 1 for controlling heating system component 100. Method 1 shown in **Fig. 3** basically comprises three sections, wherein in a first section a receiving step 2 is carried out. In receiving step 2, a starting signal S1 (see **Fig. 4)** at a controller 30 for starting heating system component 100 is received. Controller 30 may be a controller of the appliance in which heating system component 100 is used. In the case of, e.g., a start up test, the starting signal S1 is usually a signal provided by e.g. a starting switch, which can be manually operated by a user, or an automatically generated signal provided by a higher level control.

When starting signal S1 is received in receiving step 2, subsequently a test routine 3 as a second section is carried out. It shall be noted that in general there are three different options for carrying out test routine 3. One first option is carrying out test routine 3 on demand without any further heating step. A second option is carrying out test routine 3 after starting the appliance. A third option is carrying out test routine 3 during the regular operation of the appliance. It shall be understood that all three options are contemplated within the scope of the present invention, even though in the embodiment described in the following only the second option is described in detail.

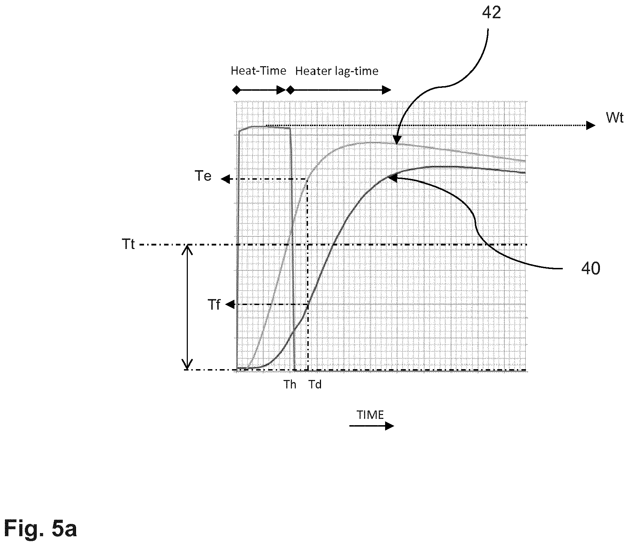

According to this embodiment **(Fig. 3),** in test routine 3 first of all the operation of the at least one temperature sensor 170a, 180a, 270a, 370a, 460, 470a, 480, 770 is tested, in that a test signal S2 is sent from controller 30 to the at least one temperature sensor 170a, 180a, 270a, 370a, 460, 470a, 480, 770 in a sending step 4. This test signal S2 (see **Fig. 4)** is sent from controller 30 to the at least one temperature sensor 170a, 180a, 270a, 370a, 460, 470a, 480, 770 and temperature sensor 170a, 180a, 270a, 370a, 460, 470a, 480, 770 may respond with a respective response signal S2R, indicating that it is operating in a normal condition. When this response signal S2R is received, test routine 3 can be further carried out. According to this embodiment **(Fig. 3)** a powering step 6 is carried out next and heating unit 120 is powered with a predetermined test power level Wt (cf. **Fig. 5a)** for a predetermined test time period Th. This test time period Th is shown in **Fig. 5a,** which is also explained in detail below. Thus, controller 30 sends power S3 to heating unit 120 for a short time of the test time period Th. Predetermined test power level Wt preferably is 50% or less.

When test power level Wt is 50% or less of the maximum power level, the risk of overheating just in test routine 3 is lowered. Other preferred values are 20% or less, 25% or less, 40% or less. Preferably, test power level Wt is not lower than 10%, since then test routine 3 will not provide exact results.

After heating unit 120 has been powered with test power level Wt for the predetermined test time period Th (see **Fig. 5a),** a temperature test value S4 is measured by the at least one temperature sensor 170a, 180a, 270a, 370a, 460, 470a, 480, 770. This step 8 of determining is preferably carried out at a determination time Td, which is shortly later than the end of test time period Th, as can be inferred from **Fig. 5a.** That means that after test time period Th has lapsed, it is preferably waited for a short time (e.g. 1 to 10 seconds) as heater unit 120 has a heater lag time and responds in a delayed manner. To take into account this heater lag time, the step of determining is carried out at determination time Td.

Moreover, in a comparing step 10, obtained temperature test value S4 is compared with a predetermined temperature threshold Tt (see **Fig. 5a),** depending on heating time Th, determination time Td, test power level Wt and the overall construction of heater unit 120, in particular the heater lag time.

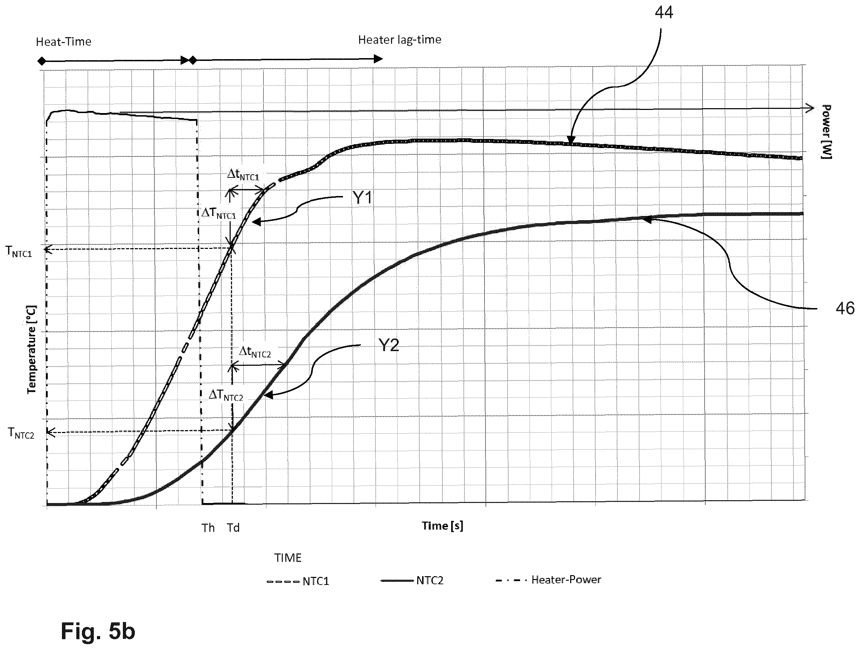

In **Fig. 5a,** lower graph 40 shows a temperature curve, which would be typical for a heating unit 120 with enough water at wet side 101. Upper graph 42 in **Fig. 5** shows a temperature curve which would be typical for a heater unit 120 with not enough water at wet side 101 and with the risk of running dry. As can be inferred from **Fig. 5,** graph 42 is much steeper than graph 40 during heating time Th. At determination time Td, the temperature is measured using the at least one temperature sensor 170a, 180a, 270a, 370a, 460, 470a, 480, 770. For graph 40, temperature value Tf is determined, which is lower than predetermined temperature threshold Tt. For graph 42, temperature Te is determined, which is above predetermined temperature threshold Tt.

Based on this comparison, a decision 12 is made after test routine 3 has been carried out. When the determined temperature value is below predetermined temperature threshold Tt (as e.g. value Tf), it is determined that test routine 3 is successful and the normal starting procedure can be continued in step 14. Normal operation of heating unit 120 is carried out.

When in decision step 12, it is found that the measured temperature value is above predetermined temperature threshold Tt (as e.g. the value Te), it is considered that test routine 3 is not successful and subsequently a safe state 16 is entered.

Such a safe state could be e.g. cutting the power supply to heating unit 120, while the appliance still is switched-on. A test result signal S5 may be provided by controller 30 to the operator, or to a higher level control unit of the appliance.

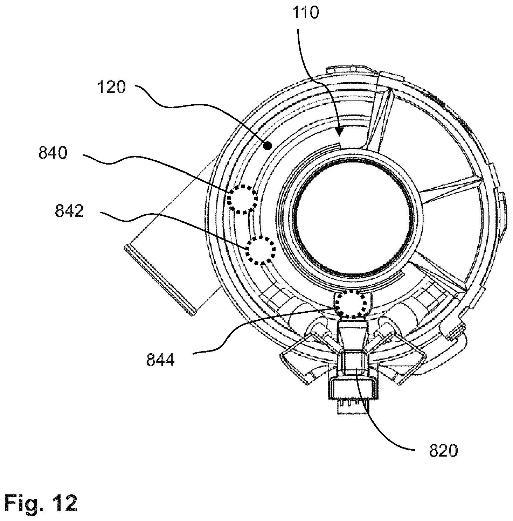

**Fig. 5b** shows an alternative diagram which illustrates embodiments using a slope of a first heating curve 44 of a first temperature sensor and a second heating curve 46 of a second temperature sensor. In **Fig. 5b,** the first temperature sensor is indicated by NTC1, and the second temperature sensor is indicated by NTC2, even though the first temperature sensor may be any of the temperature sensors 170a, 180a, 270a, 370a, 460, 470a,480, 770 and the second temperature may be any of the temperature sensors 170b, 180b, 270b, 370b, 470b, 480 (positioned near NTC1), 770 (positioned near NTC1). For example, first temperature sensor NTC1 may be mounted preferably in a first mounting place 840 (or 842) and second temperature sensor NTC2 may be mounted preferably in a second mounting place 842 (or 844) as shown in **Fig. 12,** which will be described in more detail below.

First Example - Running Dry Failure

In a first example, the two temperature sensors NTC1, NTC2 can be used to detect dry run failure. For this application, two temperature sensors NTC1, NTC2 are necessary to achieve a redundancy. In this example, the method preferably comprises determining a first slope Y1 of first heating curve 44 for first temperature sensor NTC1. First slope Y1 is defined by $\Delta T/\Delta t$ measured beginning at determination time Td. Then, this determined first slope Y1 is compared with a first slope threshold YT1, which might be in the range of 12 to 40 K/s, dependent on the physical inertia of heating unit 120. Preferably, the method also comprises determining a second slope Y2 of second heating curve 46 for second temperature sensor NTC2. Second slope Y2 is defined by $\Delta T/\Delta t$ measured beginning at determination time Td. Then, this determined second slope Y2 is compared with a second slope threshold YT2, which might be in the range of 1 to 10 K/s, dependent on the physical inertia of heating unit 120, as the second mounting position 842 is in the mixed area and therefore it is assumed that temperature rises slower there.

Furthermore, the method may comprise determining a difference $T_{NTC1} - T_{NTC2}$ with a predetermined threshold, wherein $T_{NTC1}$ is the temperature measured at the determination time Td using the first temperature sensor NTC1 and $T_{NTC2}$ is the temperature measured at the determination time Td using second temperature sensor NTC2. The threshold in this case may in the range of 80 to 120°C. Of course, also a comparison with a fixed predetermined threshold of only one temperature test value may be provided. For example, it may be determined whether the temperature test value of first temperature sensor NTC1 is above a predetermined threshold in the range of 180 to 220 °C.

In case one or more of the above four tests are positive, i.e. the respective value is above the respective threshold, test routine 3 is not successful.

Second Example - Boiled to dry

In a second example in which two temperature sensors are necessary, a so called boiled to dry procedure is carried out. During a boiled to dry procedure, heating unit is started while a maximum water level is present at wet side. Heating unit is then powered until all water is boiled and wet side is dry. Such a process may e.g. beneficially be carried out with an electric kettle.

In this process, similar steps as defined in the above first example are carried out, but the following threshold values are used:

- Second slope Y2 ($\Delta T/\Delta t$); second slope threshold YT2: 1-10 K/s

- First slope Y1 ($\Delta T/\Delta t$); first slope threshold YT1: 12-40 K/s

- $T_{NTC1} - T_{NTC2}$; Threshold: 80-120°C;

- temperature test value NTC1: 180-220°C.

Third Example - Calcification / Lime scaling

In this process, similar steps as defined in the above first example are carried out. This process is carried out to test whether there is lime on surfaces of heating system component 100. The following threshold values are used: In this process, the method preferably comprises the step of determining a difference $T_{NTC1} - T_{NTC2}$ with a predetermined threshold, wherein $T_{NTC1}$ is the temperature measured at determination time Td using first temperature sensor NTC1 and $T_{NTC2}$ is the temperature measured at determination time Td using second temperature sensor NTC2.

However, the determined difference preferably is compared with a first lime threshold YL1 and a second lime threshold YL2. First lime threshold YL1 may be in the range of < 50 to 60 °C. Second lime threshold YL2 may be in the range of 80 to 120 °C. When the determined difference is between the two lime thresholds YL1, YL2, it may indicate that lime is present on surfaces (wet side 101) of heater unit 120. A respective notice may be give to the operator.

When the second threshold is exceeded, this may indicate that there is a relatively high amount of lime at heater unit 120, and test routine 3 is considered not successful. Safe state 16 may be entered in this event.

One of the two temperature sensors NTC1, NTC2 may be formed as a safety-related sensor, while the other one is formed as a non-safety-relevant sensor.

Fourth Example - Running Dry with only one temperature sensor

In this fourth example, a running dry failure may be detected based on either first or second temperature sensor NTC1, NTC2. The method in this embodiment preferably comprises determining a first slope Y1 of first heating curve 44 for first temperature sensor NTC1. First slope Y1 is defined by $\Delta T/\Delta t$ measured beginning at determination time Td. Then, this determined first slope Y1 is compared with a first slope threshold YT1, which might be in the range of 15 to 40 K/s, dependent on the physical inertia of heating unit 120.

In a second step, an absolute temperature test value at determination time Td is measured and compared to a respective threshold. In this case, the threshold may be in the range of 180 to 220°C.

Alternatively, second temperature sensor NTC2 is used. The respective thresholds of the difference and the absolute temperature test value are: 1 to 10 K/s, and 80 to 120°, in this case.

When both, the threshold for the difference and the threshold of the absolute temperature test value are exceeded, test routine 3 is considered not to be successful and the safe state 16 is entered.

Fifth Example - Boiled to dry with only one temperature sensor

This procedure is carried out identically to the fourth example.

Sixth Example - Calcification with only one temperature sensor

In this example, only the absolute temperature test value measured at determination time Td is used. The threshold for first temperature sensor NTC1 may be set to 120 to 150°C and the threshold for a second temperature sensor NTC2 may be set to 60 to 80°.

In an alternative, the procedure of the sixth example is carried out using a further temperature sensor, which is already present in the appliance in which the heating system component is used. By means of this further sensor, the temperature of the water can be determined accurately and by this additional value, the amount of lime may be determined properly.

Moreover, it is preferred that the method in this embodiment comprises the steps: storing the measured temperature test value in a memory of the controller; and comparing the measured value with at least one previously stored value, preferably with a plurality of previously stored values.

The previously stored values may be used to calculate a curve and the slope of this curve may also be used to carry out an analysis of lime at the heater unit. Dependent on the slope a specific notice may be provided to the operator.

Seventh Example - Calcification with one temperature sensor

The seventh example is based on the fourth example and again used to determine lime.

In this embodiment, a second temperature test value after an additional waiting time after determination time Td is obtained. The additional waiting time preferably is chosen such that the temperature measured by first and/or second temperature sensor NTC1, NTC2 substantially equals the temperature of the water present at the wet side.

Then, this second value may be used as described in the third example.

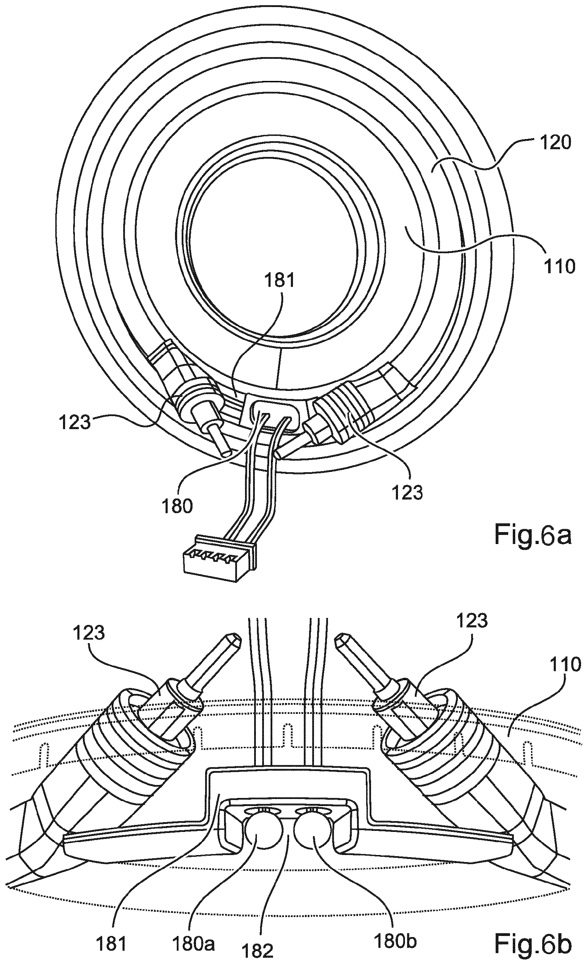

Now **Figs. 6 to 9** show additional variations and embodiments of heating system component 100 and, in particular, different places for mounting the at least one temperature sensor.

In the embodiment schematically illustrated in **Fig. 6a,** a heating system component 100 is shown which provides one or more temperature sensors, preferably NTC thermistors 180, inside groove 112. Heating unit 120 inserted in groove 112 of carrier unit 110 provides connecting pins 123 at both ends of heating unit 120. These connecting pins 123 are not located inside groove 112, but project towards an axial direction to be connected to a power source. Temperature sensor 180 is therefore preferably provided in the portion of groove 112 which is not covered by heating unit 120 and is located below connection pins 123. In order to shield the temperature sensor 180 from heating unit 120, a shielding unit 181 is provided inside and preferably form-fit to the walls of groove 112. Shielding unit 181 is made of a heat insulating material such as - but not limited to - stainless steel. As shown in cross-sectional view of **Fig. 6b,** shielding unit 181 provides a hollow chamber 182 into which temperature sensor 180a, preferably in form of an NTC pill, is inserted. In order to fix the NTC thermistors inside hollow chamber 182, an epoxy resin is injected into chamber 182, preferably a temperature resistant two-component resin. Again, optionally a second NTC thermistor 180b may be provided inside hollow chamber 182 in order to determine an average temperature of the fluid circulating at wet side 101 of carrier unit 110. The compact, yet cost-efficient design provided by this embodiment allows a reliable measurement of the fluid temperature on wet side 101 of carrier unit 120 providing an easy assemble of the heating system component 100 within a respective household appliance. Since there are no components protruding from the dry side of the carrier unit, the risk of damages during assembly is significantly reduced.

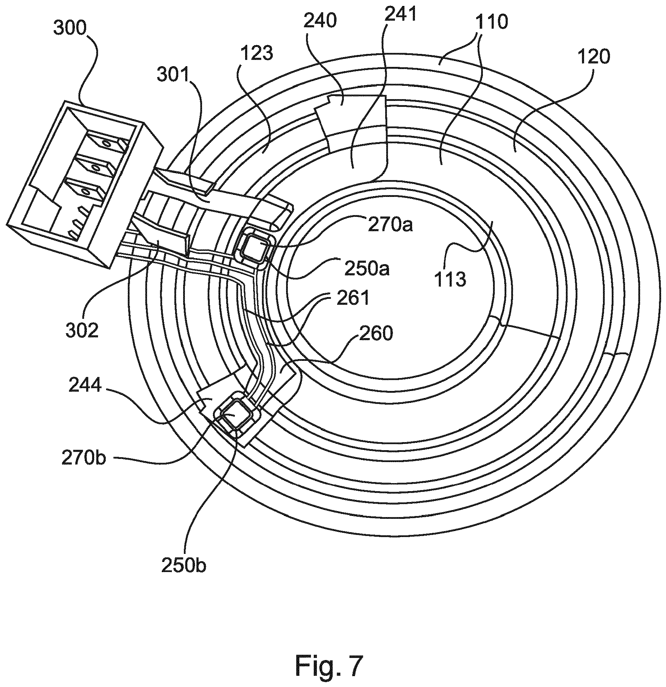

Fig. 7 schematically shows a further embodiment, in which one or more NTC thermistors 270a, 270b are provided at respective pads 250a, 250b made of a ceramic material. Each pad 250a, 250b is fixed at heat conducting plate 240 via a form-fit connection. Heat conducting plate 240 covers at least parts of an inner circumferential portion 113 of carrier unit 110, such that an NTC thermistor 270a mounted at projecting part 241 of heat conducting plate 240 may measure the temperature of the water circulating at wet side 101 of carrier unit 110. Again, in case a second NTC thermistor 270b shall be provided, second NTC thermistor 270b may either be positioned at another portion of the inner circumferential portion 113 of carrier unit 110 or heat conducting plate 240 may also cover at least portions 244 of groove 112 in which heating unit 120 is embedded such that second NTC thermistor 270b may measure the temperature of heating unit 120 itself in addition to the water temperature. Conducting paths 261 which connect NTC thermistors 270a, 270b with an external processing unit (not shown) are electrically connected with NTC thermistors 270a, 270b, wherein NTC thermistor 270a, 270b and conducting paths 261 are covered with a resin. Conducting paths 261 are preferably guided along heat conducting plate 240, wherein a thin insulating layer 260, preferably a thin foil, is provided between conducting paths 261 and heat conducting plate 240. Thin insulating layer 260 is preferably made of the polyimide Kapton. However, any other suitable polyimide, polyamide or polyester may be used instead. In a preferred embodiment, a single plug 300 can be used to provide electric power to connecting pins 123 of heating unit 120 via respective pins 302 and to provide a connection between conducting paths 261 from the one or more NTC thermistors 270a, 270b and an external processing unit. Preferably, heat conducting plate 240 is grounded by plug assembly 300 via a corresponding connection 301. Again, the compact design provides advantages during assembly of heating system component 100 within a superordinate component into which heating system component 100 is integrated. Having a single plug 300 to connect the heating unit 120 as well as one or more temperature sensors 270a, 270b further decreases the complexity during assembly as well as the required material budget.

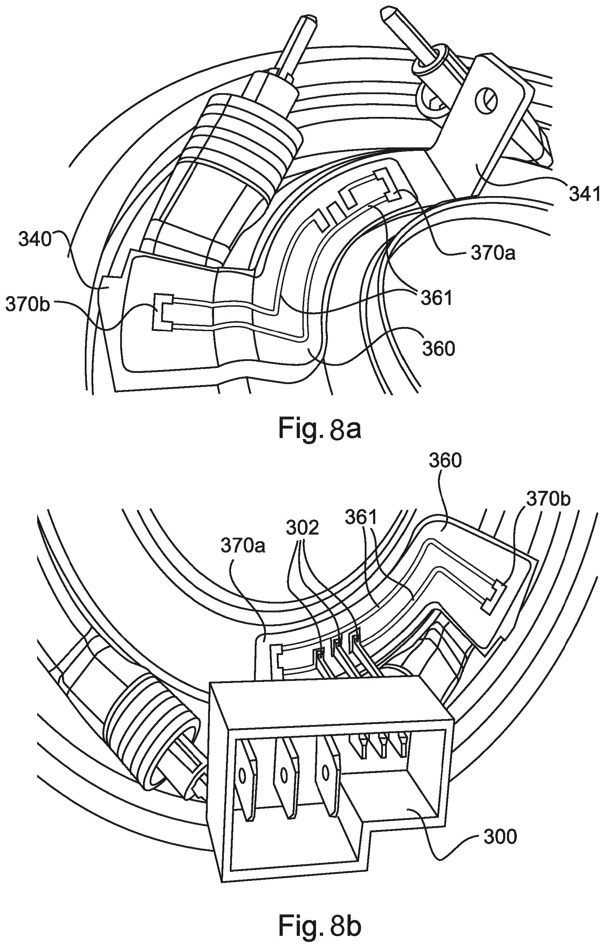

The embodiment schematically illustrated in **Fig. 8a** also shows a heating system component 100 with a heat conducting plate 340, wherein at least a part 341 of heat conducting plate 340 is in direct contact with dry side 102 of carrier unit 110, and wherein one or more NTC thermistors 370a, 370b as well as conducting paths 361 are provided thereon having an insulating layer 360, preferably in form of a thin foil, between heat conducting plate 340 and NTC thermistors 370a, 370b conducting paths 361. Insulating layer 360, the one or more NTC thermistors 370, and the respective conducting paths 361 are printed or sprayed onto heat conducting plate 340 as thin layers, wherein insulating layer 360, preferably made of a ceramic material, is provided as a first layer, NTC thermistors 370 and respective conducting paths 361 are provided on top of that first layer. Again, heating system component 100 may preferably be provided with a single plug 300 as shown in **Fig. 8b** which is adapted to provide electric power to connecting pins 123 of heating unit 120 as in the embodiment depicted in **Fig. 7.** Additionally, plug 300 provides one or more connection pins 302 to be coupled to conducting paths 361, e.g. by soldering. Preferably, heat conducting plate 340 is grounded by plug 300 via a corresponding connection 301 as shown in the embodiment depicted in **Fig. 7.** Alternatively, the grounding may be achieved by connecting an upper extension 345 of the conducting plate with ground providing a plug 300 with connection pins 302 at the bottom to be connected with conducting paths 361 and a ground connection to the side of plug 300. Again, the compact design provides advantages during assembly of heating system component 100 within a superordinate component into which heating system component 100 is integrated. Having a single plug 301 to connect heating unit 120 as well as the one or more temperature sensors 370 further decreases the complexity during assembly as well as the required material budget.

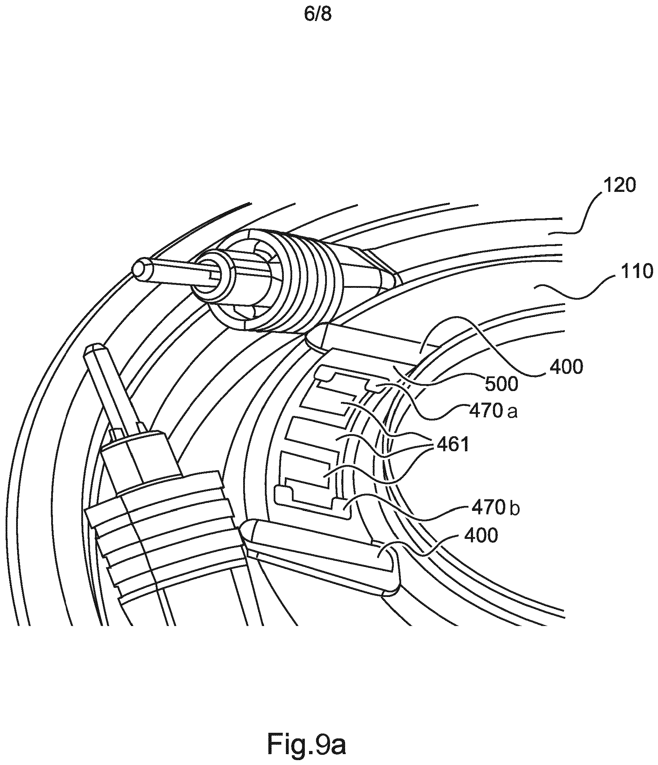

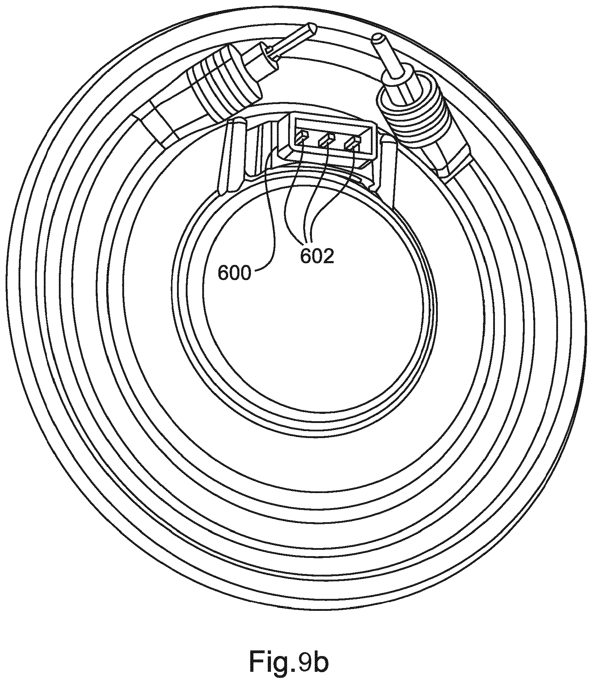

**Fig. 9a** schematically shows a further embodiment, in which one or more temperature sensors 470 are provided at an inner circumferential portion of carrier unit 110, wherein carrier unit 110 comprises an undercut portion 400 which is filled with a thermoplastic layer 500 by injection-molding to form bases of a so-called molded interconnect device (MID). In a first step, the undercut portion 400 is provided with a microstructure by a thin laser beam. The thermoplastic is provided on top of the microstructured surface of the metal layer. The metal layer is heated up by a further laser beam while the thermoplastic is pressed onto the microstructure at surface in order to provide a hybrid metal-plastic connection. Thermoplastic layer 500 is doped with a metal-plastic additive that can be activated by exposure to a laser beam. This process is commonly referred to as metallization, wherein two different sections are metalized, one for the temperature sensors 470, e.g. NTC thermistors, and the other for conducting paths 461. The NTC thermistors 470 and respective conducting paths 461 are cut free with a laser. Also in this embodiment, a form-fit plug 600 is provided having connection pins 602 to connect to the respective conducting paths 461. The housing of plug 600 is preferably made of a transparent plastic material which can be laser-welded to thermoplastic layer 500 which should therefore preferably be made of thermoplastic material absorbing the energy of a laser beam which previously passes the transparent plug 600 housing without depositing significant amounts of energy in the plastic material and thus deforming it. The form-fit design provided by this embodiment eases the assembly of heating system component 100 into a superordinate system as well as reduces the size and material budget required to implement a temperature sensor 470 for heating system component 100.

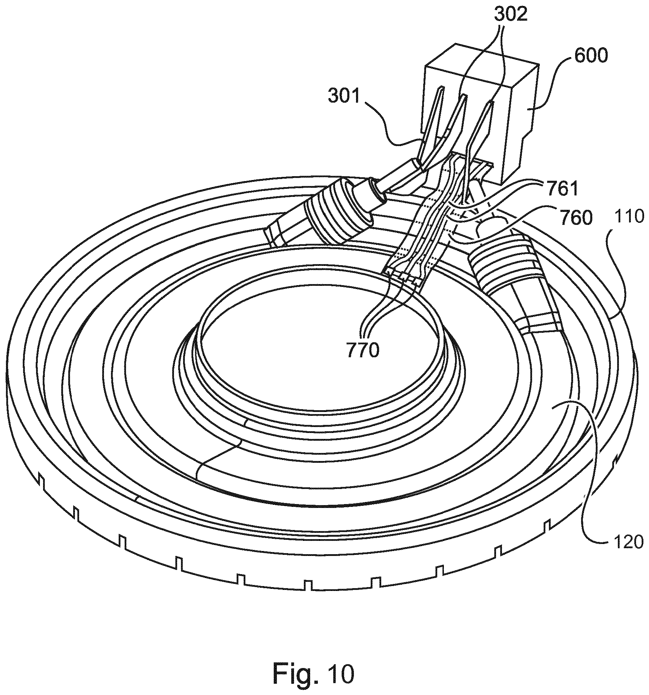

**Fig. 10** schematically shows a further embodiment, in which one or more temperature sensors, in particular NTC thermistors 770 as well as conductor paths 761 between the one or more NTC thermistors 770 and an external plug are formed at a thin layer 760, preferably a thin polymer foil, before the foil is attached to carrier unit 110. NTC thermistors 770 as well as conductor paths 761 may either be formed by printing, vapor deposition or metallization. Preferably, the sensor foil is pre-assembled with a suitable plug 600 providing conductor pins to the conductor paths as well as preferably also power connections for the heating unit and as well as a pin to ground the carrier unit. Plug 600 may then be mounted at carrier unit 710 by welding, in particular spot welding power connections 302 and a ground connection 301 to heating unit 120 and carrier unit 710, respectively. Thin foil 760 is then attached to carrier unit 710 by gluing at least a portion of the lower side of foil 760 to the dry side of carrier unit 110 using a heat resistant gluing material. The NTC thermistors are preferably positioned at a portion of the dry side of carrier unit 110 whose wet side is in contact with the fluid circulating at the wet side. The embodiment allows a particularly flexible way of arranging the temperature sensors at a desired position of the carrier unit. Furthermore, the embodiment provides a very compact design without any protrusions or cables which require space and caution during assembly.

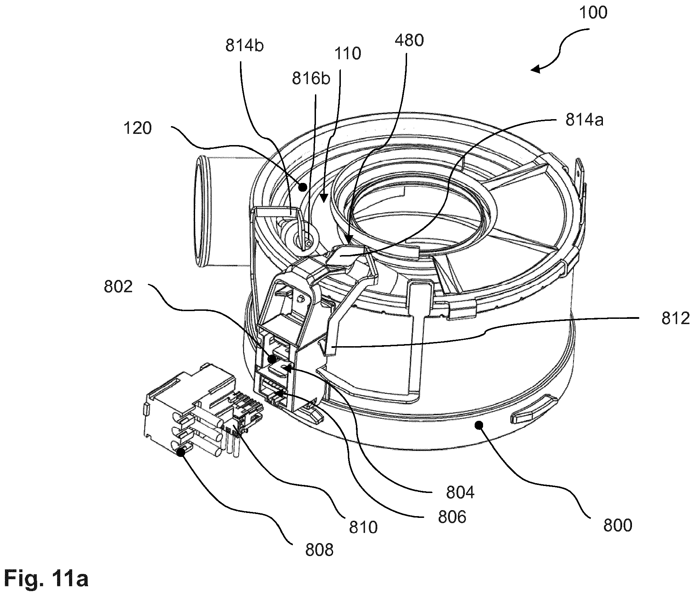

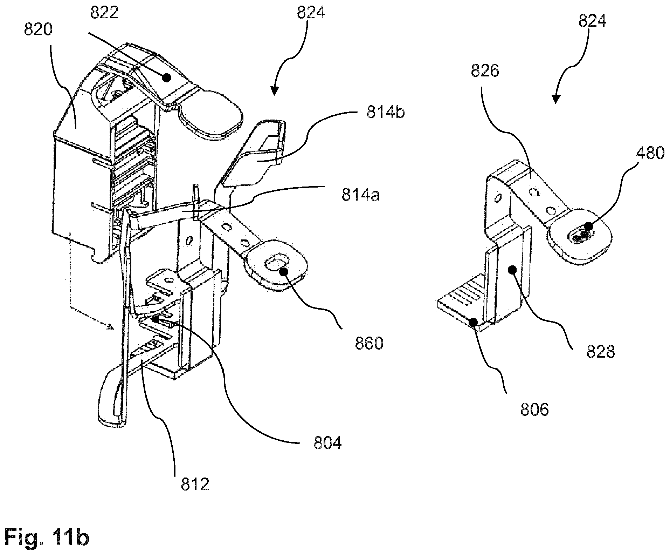

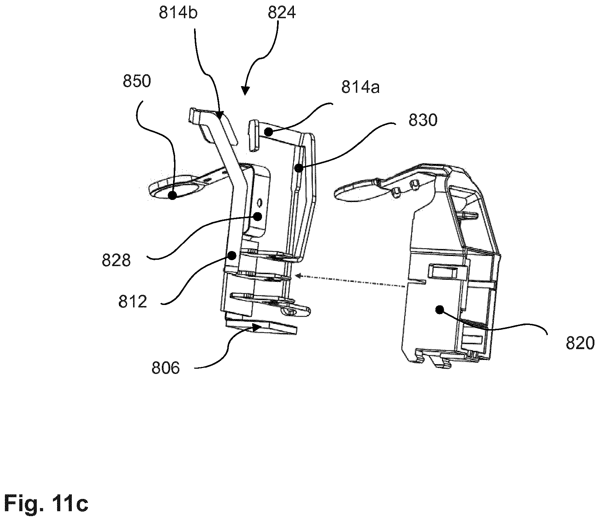

**Figs. 11a to 11c** show a further embodiment of heating system component 100, which again comprises a carrier unit 110 and a heating unit 120 attached thereto. In the overall drawing of **Fig. 11a,** it can be seen that heating system component 100 is attached to a pump housing 800, which can be assembled within an appliance. Heating system component 100 comprises a main connector board 802 comprising two male connectors 804 for heating unit 120 and one male connector 806 for the temperature sensor 480, which will be described in more detail with respect to **Figs. 11b, 11c.** Male connectors 804, 806 are connectable to a first female connector 808 for heating unit 120 and a second female connector 810 for temperature sensor 480. In this embodiment, heating system component 100 only comprises one single temperature sensor 480.

The two main connectors 408 for heating unit 120 are basically formed at a heating unit connector frame 812, which is shown in **Fig. 11b.** This frame 812 comprises the two male connectors 804 and furthermore, a first and second heating unit contact 814a, 814b, which extend from frame 812 and contact the two respective end contacts 816a, 816b of heating unit 120 (see **Fig. 11a).** Frame 812 is attached to carrier unit 110 by means of a clip housing 820, which comprises a holding down clip 822, whose function will be described below.

Moreover, male contact 806 for temperature sensor 480 is attached to a basically Z-shaped lash element 824, which comprises a holding arm 826. At the free distal end of holding arm 826, temperature sensor 480 is arranged. At a little portion, there is provided a foil, in particular a Kapton-foil, which is electrically insulating and heat conductive, as particularly described in the European patent application 17188041.2.

On the left-hand side of **Fig. 11b,** lash element 824 is shown mounted to the frame 812, and on the right-hand side of **Fig. 11b,** lash element 824 is shown separately.

When clip housing 812 is mounted over frame 812 and lash element 824, holding down clip 822 will contact temperature sensor 480 and hold and push it towards heating unit 120, as basically shown in **Fig. 11a.** Holding down clip 822 may also be attached to temperature sensor 480 for holding it in place.

To improve the contact properties, a contact paste 850 (e.g. silver paste) with good thermal properties can optionally be used.

Also, an elastic element 860 can optionally be used to compensate the mounting tolerances (e.g. heat resistant rubber or similar).

**Fig. 11c** now shows a second view of frame 812, lash element 824 as well as clip housing 820. Lash element 824 is preferably formed out of the Kapton-foil as defined above.

In **Fig. 11c,** moreover, grounding contact 830 for heating unit 120 is shown.

**Fig. 12** additionally shows three different mounting positions for the temperature sensor. One first mounting position 840 would be directly on heating unit 120. This is the most heated portion and therefore mounting of the temperature sensor could be difficult. A second position 842 is a position between heating unit 120 and carrier unit 110, which is closer to carrier unit 110 and thus would be a preferred mounting place. According to the present embodiment of **Figs. 11a to 11c,** a third placement 844 is used, which is easy to assemble and the temperature sensor 480 can be held in place by the clip housing 820.

An example application of the invention generally relates to situations where a fluid medium needs to be heated in an efficient manner, for example in household appliances such as dishwashers, dryers, and washing machines, small electrical appliances such as coffeemakers, irons, steam generators etc. or in water heaters.

In the claims, the word *"comprising"* does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Determinations like measuring a temperature performed by one or several units or devices can be performed by any other number of units or devices. For example, measuring a temperature can be performed by a single temperature sensor or by any other number of different units. The determinations and/or the control of the heating system for heating fluid media can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the internet or other wired or wireless telecommunication systems. The term *"software code"* may also refer to embedded software.

Any reference signs in the claims should not be construed as limiting the scope.

REFERENCE SIGNS LIST

| | |
|---|---|
| 1 | method for controlling a heating system |
| 2 | receiving a starting signal |
| 3 | test routine |
| 4 | sending a test signal |
| 6 | powering the heating unit |
| 8 | obtaining a temperature test value |
| 10 | comparing the obtained test value |
| 12 | determining whether test routine is successful |
| 14 | continue starting process |
| 16 | entering safe state |
| 30 | controller |
| 32 | memory |
| 34 | software code |
| 36 | processor |
| 40, 42, 44, 46 | graphs, heating curve |
| 100 | heating system component |
| 101 | wet side |
| 102 | dry side |
| 110 | carrier unit |
| 111 | circular hole |
| 112 | groove |
| 113 | circumferential portion |
| 120 | heating unit |
| 122 | thermally conducting paste |
| 123 | heating unit connecting pins |
| 140, 240, 340 | heat conducting plate |
| 141, 241, 341 | projecting part |
| 142 | detached portion |
| 143 | trenches |
| 144, 244 | non-detached portion |
| 170, 180, 270, 370, 470, 480, 770 | temperature sensor |
| 170a, 180a, | first temperature sensor |
| 270a, 370a, 470a 170b, 180b, | second temperature sensor |
| 270b, 370b, 470b 181 | shielding unit |
| 182 | hollow chamber |
| 250a | first ceramic pad |
| 250b | second ceramic pad |
| 260, 360, 760 | insulating layer |
| 261, 361, 461, 300,600 | plug |
| 301 | connection |
| 302, 602 | connection pins |
| 345 | upper extension |
| 400 | undercut portion |
| 500 | thermoplastic layer |
| 761 | conductor paths |
| 800 | pump housing |
| 802 | connector board |
| 804 | first male connectors |
| 806 | second male connector |
| 808 | first female connector |
| 810 | second female connector |
| 812 | frame |
| 814a, 814b | contacts |
| 816a, 816b | contacts of heating unit |

| 820 | clip housing |
| 822 | holding down clip |
| 826 | holding arm |
| 824 | lash element |
| 828 | foil element |
| 830 | grounding contact |
| 840 | first mounting place (hot area - on heating element) |
| 842 | second mounting place (mix area - between 840 and 844) |
| 844 | third mounting place (area with media temperature) |
| 850 | contact paste |
| 860 | elastic element |
| S1 | starting signal |
| S2 | test signal |
| S2R | test return signal |
| S3 | powering signal for heating unit |
| S4 | temperature test value signal |
| S5 | feedback signal |
| Td | detection time |
| Te | temperature value exceeding threshold |
| Tf | temperature value below threshold |
| Th | heating time |
| Tt | temperature threshold |
| T0 | test start time |
| T1 | test end time |
| T2 | duration |
| Wt | test power level |
| Y | slope of heating curve |

## Claims

1. A method (1) for controlling a heating system component (100) of a heating system for heating a fluid medium,

said heating system component (100) comprising:

a carrier unit (110);
a heating unit (120) coupled to said carrier unit (110); and
a controller;
wherein said carrier unit (110) comprises a wet side and a dry side, wherein

said wet side corresponds to a surface of said carrier unit (110) configured to be in contact with said fluid medium, wherein said dry side is located on a surface opposite to said wet side;
and further comprising at least one temperature sensor (170a, 180a, 180b, 270, 370, 470), in particular an NTC thermistor, wherein said temperature sensor (170a, 180a, 180b, 270, 370, 470, 480) is effectively in thermal contact with at least a part of an upper surface of said dry side of the carrier unit (110),
the method (1) comprising:

- receiving (2) a starting signal (S1) at the controller (30) for starting heating of the heating system component (100);

**characterized in that** the method (1) further comprises:

- carrying out a test routine (3) for at least the at least one temperature sensor (170a, 180a, 270a, 370a, 460, 470a, 480, 770); and
- in case the test routine (3) is not successful: entering a safe state (16) of the heating system component (100);

wherein the test routine includes:

- powering (6, S3) the heating unit (120) with a predetermined test power level (Pt) for a predetermined test time period (Th);
- obtaining (8) a temperature test value (S4) measured by said at least one temperature sensor (170a, 180a, 270a, 370a, 460, 470a, 480, 770); and
- comparing (10) the obtained temperature test value (S4) with a predetermined temperature threshold (Tt); and

wherein the test routine (3) is considered not being successful, when the obtained temperature test value (S4) is above a predetermined threshold.

2. The method of claim 1, wherein the test routine includes:

- sending (4) a test signal (S2) from the controller (30) to said at least one temperature sensor (170a, 180a, 270a, 370a, 460, 470a, 480, 770) and testing whether the temperature sensor (170a, 180a, 270a, 370a, 460, 470a, 480, 770) is active based on a response of the temperature sensor (170a, 180a, 270a, 370a, 460, 470a, 480, 770) triggered by the test signal (S2).

3. The method of claim 1 or 2, wherein the test routine (3) is considered not being successful, when the obtained temperature test value (S4) is above a predetermined threshold.

4. The method of claim 3, wherein the test power level (Pt) is 100% or less of a maximum power level, preferably 50% or less.

5. The method of claim 3 or 4, wherein the test power is supplied in a pulsed manner.

6. The method of any preceding claim, wherein the test routine includes:

- powering (6) the heating unit (120) with a predetermined test power level (Pt) at a test start time (t0);
- obtaining (8) a temperature test value (S4) measured by said at least one temperature sensor (170a, 180a, 270a, 370a, 460, 470a, 480, 770);
- determining that a predetermined test temperature threshold (Tt) is reached at a test end time (t1); and
- comparing (10) a duration (t2=t1-t0) from the test start time (t0) to the test end time (t1) with a predetermined time period threshold.

7. The method of any preceding claim, wherein the test routine includes:

- powering the heating unit (120) with a predetermined heat quantity.

8. The method of claim 7, comprising:

- determining a supply voltage of the heating unit (120); and
- calculating by the controller (30) a start up supply time necessary to obtain the supply of the predetermined heat quantity.

9. The method of claims 3 or 6, wherein multiple temperature test values (S4) are obtained, and further comprising the step:

- calculating one single heating curve (40, 42) based on the multiple temperature test values (S4), or calculating individual temperature curves for each temperature test value.

10. The method of any preceding claim, comprising:

- providing for the heating system component (100) a second temperature sensor (170b, 180b, 270b, 370b, 470b,) which is positioned distal from said first temperature sensor (170a, 180a, 270a, 370a, 470a), preferably near the first temperature sensor (480, 770).

11. The method of any preceding claim, comprising:

- providing a connection between the controller (30) and said at least one temperature sensor (170a, 180a, 270a, 370a, 460, 470a, 480, 770) via a primary connection and providing a second temperature sensor by using a redundant connection.

**12.** The method of any preceding claim, comprising,

- recessing said heating unit (120) in a groove (112) provided on said dry side of the carrier unit (110).

**13.** A heating system component (100) of a heating system for heating a fluid medium,

said heating system component (100) comprising:

a carrier unit (110);
a heating unit (120) coupled to said carrier unit (110); and
a controller (30);

wherein said carrier unit (110) comprises a wet side and a dry side, wherein said wet side corresponds to a surface of said carrier unit (110) configured to be in contact with said fluid medium, wherein said dry side is located on a surface opposite to said wet side;
and further comprising at least one temperature sensor (170a, 180a, 270a, 370a, 460, 470a, 480, 770), in particular a NTC thermistor, wherein said temperature sensor (170a, 180a, 270a, 370a, 460, 470a, 480, 770) is effectively in thermal contact with at least a part of an upper surface of said dry side of the carrier unit (110), **characterized in that** said controller (30) comprises a memory (32) and a processor (36), the memory (32) comprises software code (34), which, when run on the processor (36), causes the controller (30) to carry out the method (1) of any of the claims 1 to 12.

**14.** The heating system component (100) of claim 13, wherein the heat conducting plate (140) comprises a part with thermal connection to said heating unit (120) and a part with thermal connection to said carrier unit (110) distal from the connection to said heating unit (120) providing a mixing temperature of this two temperature levels on said heat conducting plate (140), wherein the at least one temperature sensor (170a, 180a, 270a, 370a, 460, 470a, 480, 770) is attached in a position (842, 844) ensuring the intended mixing temperature on one side and keeping the temperatures of the at least one temperature sensor (170a, 180a, 270a, 370a, 460, 470a, 480, 770) within the specified operation temperature range of said at least one temperature sensor (170a, 180a, 270a, 370a, 460, 470a, 480, 770) which is significantly lower than the maximum temperature of said heating unit.

**15.** The heating system component (100) of claim 13, wherein said heating unit (120) is recessed in a groove (112) provided on said dry side of the carrier unit (110).

**16.** The heating system component (100) of claim 13, wherein said heating unit is in the form of quartzite heaters, flow through heaters, flat-plate heaters, thick film and thin film heaters.

**Patentansprüche**

**1.** Verfahren (1) zur Regelung einer Heizsystemkomponente (100) eines Heizsystems zum Erwärmen eines flüssigen Mediums,

wobei die Heizsystemkomponente (100) umfasst:

eine Trägereinheit (110);
eine Heizeinheit (120), die mit der Trägereinheit (110) gekoppelt ist; und
einen Regler;

wobei die Trägereinheit (110) eine Nassseite und eine Trockenseite umfasst, wobei die Nassseite einer Oberfläche der Trägereinheit (110) entspricht, die ausgestaltet ist, in Kontakt mit dem flüssigen Medium zu sein, wobei sich die Trockenseite auf einer der Nassseite entgegenliegenden Oberfläche befindet;
und ferner umfassend mindestens einen Temperatursensor (170a, 180a, 180b, 270, 370, 470), insbesondere einen NTC-Thermistor, wobei der Temperatursensor (170a, 180a, 180b, 270, 370, 470, 480) wirksam in thermischem Kontakt mit wenigstens einem Teil einer oberen Oberfläche der Trockenseite der Trägereinheit (110) steht,
wobei das Verfahren (1) umfasst:

- Empfangen (2) eines Startsignals (S1) an dem Regler (30) zum Starten des Heizens der Heizsystemkomponente (100);

**dadurch gekennzeichnet, dass** das Verfahren (1) ferner umfasst:

- Ausführen einer Testroutine (3) für zumindest den mindestens einen Temperatursensor (170a, 180a, 270a, 370a, 460, 470a, 480, 770); und
- falls die Testroutine (3) nicht erfolgreich ist: Übergang in einen sicheren Zustand (16) der Heizsystemkomponente (100);
wobei die Testroutine umfasst:

- Speisen (6, S3) der Heizeinheit (120) mit einem vorbestimmten Teststrompegel (Pt) für einen vorbestimmten Testzeitraum (Th);
- Erhalten (8) eines von dem mindestens einen Temperatursensor (170a, 180a, 270a, 370a, 460, 470a, 480, 770) gemessenen Temperaturtestwerts (S4); und
- Vergleichen (10) des erhaltenen Temperaturtestwerts (S4) mit einem vorbestimmten Temperatur-Schwellenwert (Tt); und wobei die Testroutine (3) als nicht erfolgreich angesehen wird, wenn der erhaltene Temperaturtestwert (S4) über einem vorbestimmten Schwellenwert liegt.

2. Verfahren nach Anspruch 1, wobei die Testroutine umfasst:

- Senden (4) eines Testsignals (S2) von dem Regler (30) an den mindestens einen Temperatursensor (170a, 180a, 270a, 370a, 460, 470a, 480, 770) und auf der Grundlage einer Antwort des Temperatursensors (170a, 180a, 270a, 370a, 460, 470a, 480, 770), die durch das Testsignal (S2) ausgelöst wird, Testen, ob der Temperatursensor (170a, 180a, 270a, 370a, 460, 470a, 480, 770) aktiv ist.

3. Verfahren nach Anspruch 1 oder 2, wobei die Testroutine (3) als nicht erfolgreich angesehen wird, wenn der erhaltene Temperaturtestwert (S4) über einem vorbestimmten Schwellenwert liegt.

4. Verfahren nach Anspruch 3, wobei der Teststrompegel (Pt) 100% oder weniger eines maximalen Strompegels, vorzugsweise 50% oder weniger, beträgt.

5. Verfahren nach Anspruch 3 oder 4, wobei der Teststrom gepulst zugeführt wird.

6. Verfahren nach einem der vorhergehenden Ansprüche, wobei die Testroutine umfasst:

- Speisen (6) der Heizeinheit (120) mit einem vorbestimmten Teststrompegel (Pt) zu einem Teststartzeitpunkt (t0);
- Erhalten (8) eines Temperaturtestwerts (S4), der von dem mindestens einen Temperatursensor (170a, 180a, 270a, 370a, 460, 470a, 480, 770) gemessen wird;
- Bestimmen, dass ein vorbestimmter Testtemperatur-Schwellenwert (Tt) zu einem Testendzeitpunkt (t1) erreicht wird; und
- Vergleichen (10) einer Dauer (t2=t1-t0) von dem Teststartzeitpunkt (t0) bis zu dem Testendzeitpunkt (t1) mit einem vorbestimmten Zeitraumschwellenwert.

7. Verfahren nach einem der vorhergehenden Ansprüche, wobei die Testroutine umfasst:

- Speisen der Heizeinheit (120) mit einer vorbestimmten Wärmemenge.

8. Verfahren nach Anspruch 7, umfassend:

- Bestimmen einer Versorgungsspannung der Heizeinheit (120); und
- Berechnen einer Hochfahr-Zuführzeit, die erforderlich ist, um die Zuführung der vorbestimmten Wärmemenge zu erhalten, durch den Regler (30).

9. Verfahren nach Anspruch 3 oder 6, bei dem mehrere Temperaturtestwerte (S4) erhalten werden und das ferner den folgenden Schritt umfasst:

- Berechnen einer einzigen Heizkurve (40, 42) auf der Grundlage der mehreren Temperaturtestwerte (S4) oder Berechnen einzelner Temperaturkurven für jeden Temperaturtestwert.

10. Verfahren nach einem der vorhergehenden Ansprüche, umfassend:

- Bereitstellen eines zweiten Temperatursensors (170b, 180b, 270b, 370b, 470b) für die Heizsystemkomponente (100), der distal von dem ersten Temperatursensor (170a, 180a, 270a, 370a, 470a), vorzugsweise nahe dem ersten Temperatursensor (480, 770), positioniert ist.

11. Verfahren nach einem der vorhergehenden Ansprüche, umfassend:

- Bereitstellen einer Verbindung zwischen dem Regler (30) und dem mindestens einen Temperatursensor (170a, 180a, 270a, 370a, 460, 470a, 480, 770) über eine primäre Verbindung und Bereitstellen eines zweiten Temperatursensors unter Verwendung einer redundanten Verbindung.

12. Verfahren nach einem der vorhergehenden Ansprüche, umfassend:

- Einsetzen der Heizeinheit (120) in eine Nut (112), die auf der Trockenseite der Trägereinheit (110) vorgesehen ist.

13. Heizsystemkomponente (100) eines Heizsystems zum Erwärmen eines flüssigen Mediums,

wobei die Heizsystemkomponente (100) umfasst:

eine Trägereinheit (110);
eine Heizeinheit (120), die mit der Trägereinheit (110) gekoppelt ist; und
einen Regler (30),

wobei die Trägereinheit (110) eine Nassseite und eine Trockenseite umfasst, wobei die Nassseite einer Oberfläche der Trägereinheit (110) entspricht, die ausgestaltet ist, in Kontakt mit dem flüssigen Medium zu sein, wobei sich die Trockenseite auf einer der Nassseite entgegenliegenden Oberfläche befindet; und ferner umfassend mindestens einen Temperatursensor (170a, 180a, 270a, 370a, 460, 470a, 480, 770), insbesondere einen NTC-Thermistor, wobei der Temperatursensor (170a, 180a, 270a, 370a, 460, 470a, 480, 770) wirksam in thermischem Kontakt mit wenigstens einem Teil einer oberen Oberfläche der Trockenseite der Trägereinheit (110) steht,
**dadurch gekennzeichnet, dass** der Regler (30) einen Speicher (32) und einen Prozessor (36) umfasst, wobei der Speicher (32) Softwarecode (34) umfasst, der bei Ausführung auf dem Prozessor (36) bewirkt, dass der Regler (30) das Verfahren (1) nach einem der Ansprüche 1 bis 12 ausführt.

14. Heizsystemkomponente (100) nach Anspruch 13, wobei die wärmeleitende Platte (140) einen Teil mit thermischer Verbindung zu der Heizeinheit (120) und einen Teil mit thermischer Verbindung zu der sich distal von der Verbindung zu der Heizeinheit (120) befindenden Trägereinheit (110) umfasst, die eine Mischtemperatur dieser zwei Temperaturniveaus an der wärmeleitenden Platte (140) bereitstellen, wobei der mindestens eine Temperatursensor (170a, 180a, 270a, 370a, 460, 470a, 480, 770) in einer Position (842, 844) angebracht ist, die die gewollte Mischtemperatur auf einer Seite sicherstellt und die Temperaturen des mindestens einen Temperatursensors (170a, 180a, 270a, 370a, 460, 470a, 480, 770) in dem vorgegebenen Betriebstemperaturbereich des mindestens einen Temperatursensors (170a, 180a, 270a, 370a, 460, 470a, 480, 770) hält, der erheblich niedriger als die Höchsttemperatur der Heizeinheit ist.

15. Heizsystemkomponente (100) nach Anspruch 13, wobei die Heizeinheit (120) in eine Nut (112) eingesetzt ist, die auf der Trockenseite der Trägereinheit (110) vorgesehen ist.

16. Heizsystemkomponente (100) nach Anspruch 13, wobei die Heizeinheit die Form von Quarzit-Heizern, Durchflussheizern, Flachplattenheizern, Dickschicht-Heizern und Dünnschicht-Heizern hat.

**Revendications**

1. Procédé (1) pour commander un composant de système de chauffage (100) d'un système de chauffage pour chauffer un milieu fluide,

   ledit composant de système de chauffage (100) comprenant :

   une unité support (110) ;
   une unité de chauffage (120) accouplée à ladite unité support (110) ; et
   un dispositif de commande ;
   ladite unité support (110) comprenant un côté humide et un côté sec, ledit côté humide correspondant à une surface de ladite unité support (110) conçue pour être en contact avec ledit milieu fluide, ledit côté sec étant situé sur une surface opposée audit côté humide ;

   et comprenant en outre au moins un capteur de température (170a, 180a, 180b, 270, 370, 470), en particulier une thermistance CTN, ledit capteur de température (170a, 180a, 180b, 270, 370, 470, 480) étant efficacement en contact thermique avec au moins une partie d'une surface supérieure dudit côté sec de l'unité support (110), le procédé (1) comprenant :

   - la réception (2) d'un signal de démarrage (S1) au niveau du dispositif de commande (30) pour démarrer le chauffage du composant de système de chauffage (100) ;

   **caractérisé en ce que** le procédé (1) comprend en outre :

   - la réalisation d'une routine de test (3) pour au moins ledit au moins un capteur de température (170a, 180a, 270a, 370a, 460, 470a, 480, 770) ; et
   - dans le cas où la routine de test (3) n'est pas réussie : l'entrée dans un état de sécurité (16) du composant de système de chauffage (100) ;
   la routine de test comprenant :

   - la mise sous tension (6, S3) de l'unité de chauffage (120) à un niveau de puissance de test prédéterminé (Pt) pendant une période de temps de test prédéterminée (Th) ;
   - l'obtention (8) d'une valeur de test de température (S4) mesurée par ledit au moins un capteur de température (170a, 180a, 270a, 370a, 460, 470a, 480, 770) ; et
   - la comparaison (10) de la valeur de test de température (S4) obtenue à un seuil de température (Tt) prédéterminé ; et

   la routine de test (3) étant considérée comme n'étant pas réussie lorsque la valeur de test de température (S4) obtenue est supérieure à un seuil prédéterminé.

2. Procédé selon la revendication 1, dans lequel la routine de test comprend :

   - l'envoi (4) d'un signal de test (S2) à partir du dispositif de commande (30) audit au moins un capteur de température (170a, 180a, 270a, 370a, 460, 470a, 480, 770) et le test du fait que le capteur de température (170a, 180a, 270a, 370a, 460, 470a, 480, 770) est actif ou non sur la base d'une réponse du capteur de température (170a, 180a, 270a, 370a, 460, 470a, 480, 770) déclenchée par le signal de test (S2).

3. Procédé selon la revendication 1 ou 2, dans lequel la routine de test (3) est considérée comme n'étant pas réussie lorsque la valeur de test de température (S4) obtenue est supérieure à un seuil prédéterminé.

4. Procédé selon la revendication 3, dans lequel le niveau de puissance de test (Pt) est de 100 % ou moins d'un niveau de puissance maximal, de préférence de 50 % ou moins.

5. Procédé selon la revendication 3 ou 4, dans lequel la puissance de test est fournie de manière puisée.

6. Procédé selon l'une quelconque revendication précédente, dans lequel la routine de test comprend :

   - la mise sous tension (6) de l'unité de chauffage (120) à un niveau de puissance de test prédéterminé (Pt) à un instant de début de test (t0) ;
- l'obtention (8) d'une valeur de test de température (S4) mesurée par ledit au moins un capteur de température (170a, 180a, 270a, 370a, 460, 470a, 480, 770) ;
- la détermination du fait qu'un seuil de température (Tt) de test prédéterminé est atteint à un instant de fin de test (t1) ; et
- a comparaison (10) d'une durée (t2 = t1-t0) depuis l'instant de début de test (t0) jusqu'à l'instant de fin de test (t1) à un seuil de période de temps prédéterminé.

**7.** Procédé selon l'une quelconque revendication précédente, dans lequel la routine de test comprend :

- la mise sous tension de l'unité de chauffage (120) à une quantité de chaleur prédéterminée.

**8.** Procédé selon la revendication 7, comprenant :

- la détermination d'une tension d'alimentation de l'unité de chauffage (120) ; et
- le calcul, par le dispositif de commande (30), d'un temps d'alimentation de démarrage nécessaire pour obtenir l'alimentation de la quantité de chaleur prédéterminée.

**9.** Procédé selon les revendications 3 ou 6, dans lequel de multiples valeurs de test de température (S4) sont obtenues et qui comprend en outre l'étape de :

- calcul d'une seule courbe de chauffage (40, 42) sur la base des multiples valeurs de test de température (S4) ou calcul de courbes de température individuelles pour chaque valeur de test de température.

**10.** Procédé selon l'une quelconque revendication précédente, comprenant :

- la fourniture, au composant de système de chauffage (100), d'un deuxième capteur de température (170b, 180b, 270b, 370b, 470b) qui est positionné de manière distale par rapport audit premier capteur de température (170a, 180a, 270a, 370a, 470a), de préférence à proximité du premier capteur de température (480, 770).

**11.** Procédé selon l'une quelconque revendication précédente, comprenant :

- la réalisation d'une liaison entre le dispositif de commande (30) et ledit au moins un capteur de température (170a, 180a, 270a, 370a, 460, 470a, 480, 770) par l'intermédiaire d'une liaison primaire et la fourniture d'un deuxième capteur de température à l'aide d'une liaison redondante.

**12.** Procédé selon l'une quelconque revendication précédente, comprenant

- l'encastrement de l'unité de chauffage (120) dans une rainure (112) disposée sur le côté sec de l'unité support (110).

**13.** Composant de système de chauffage (100) d'un système de chauffage pour chauffer un milieu fluide,

le composant de système de chauffage (100) comprenant :

une unité support (110) ;
une unité de chauffage (120) accouplée à ladite unité support (110) ; et
un dispositif de commande (30) ;

l'unité support (110) comprenant un côté humide et un côté sec, ledit côté humide correspondant à une surface de ladite unité support (110) conçue pour être en contact avec ledit milieu fluide, ledit côté sec étant situé sur une surface opposée audit côté humide ;
et comprenant en outre au moins un capteur de température (170a, 180a, 270a, 370a, 460, 470a, 480, 770), en particulier une thermistance CTN, ledit capteur de température (170a, 180a, 270a, 370a, 460, 470a, 480, 770) étant efficacement en contact thermique avec au moins une partie d'une surface supérieure dudit côté sec de l'unité support (110),
**caractérisé en ce que** ledit dispositif de commande (30) comprend une mémoire (32) et un processeur (36), la mémoire (32) comprend un code logiciel (34) qui, lorsqu'il est exécuté sur le processeur (36), amène le dispositif de commande (30) à mettre en oeuvre le procédé (1) selon l'une quelconque des revendications 1 à 12.

14. Composant de système de chauffage (100) selon la revendication 13, dans lequel la plaque thermoconductrice (140) comprend une partie en liaison thermique avec ladite unité de chauffage (120) et une partie en liaison thermique avec ladite unité support (110) distale par rapport à la liaison à ladite unité de chauffage (120) réalisant une température de mélange de ces deux niveaux de température sur ladite plaque thermoconductrice (140), ledit au moins un capteur de température (170a, 180a, 270a, 370a, 460, 470a, 480, 770) étant fixé dans une position (842, 844) assurant la température de mélange prévue sur un côté et maintenant les températures dudit au moins un capteur de température (170a, 180a, 270a, 370a, 460, 470a, 480, 770) dans la plage de température de fonctionnement spécifiée dudit au moins un capteur de température (170a, 180a, 270a, 370a, 460, 470a, 480, 770) qui est significativement inférieure à la température maximale de ladite unité de chauffage.

15. Composant de système de chauffage (100) selon la revendication 13, dans lequel ladite unité de chauffage (120) est encastrée dans une rainure (112) disposée sur ledit côté sec de l'unité support (110).

16. Composant de système de chauffage (100) selon la revendication 13, dans lequel ladite unité de chauffage est sous forme de chauffage en quartzite, de chauffage à circulation continue, de chauffage à plaques planes, de chauffage à film épais et à film mince.

Fig. 1

A - A

102

112

112    120    122

101

Fig. 2a

B - B

143    140

110

141    120

101

Fig. 2b

1

3

```
        ┌─────────────┐
        │      2      │
        └─────────────┘
               │
               ▼
 ┌ ─ ─ ─ ─ ─ ─ ─ ─ ─ ─ ─ ┐
 │     ┌─────────────┐     │
       │      4      │
 │     └─────────────┘     │
               │
 │             ▼           │
       ┌─────────────┐
 │     │      6      │     │
       └─────────────┘
 │             │           │
               ▼
 │     ┌─────────────┐     │
       │      8      │
 │     └─────────────┘     │
               │
 │             ▼           │
       ┌─────────────┐
 │     │     10      │     │
       └─────────────┘
 └ ─ ─ ─ ─ ─┬─ ─ ─ ─ ─ ┘
            │
            ▼
12         ◇ ──────────────▶ ┌─────────────┐
           │                 │     16      │
           ▼                 └─────────────┘
     ┌─────────────┐
     │     14      │
     └─────────────┘
```

**Fig. 3**

S1

30   34   32   36

S4   S2, S2R

| 170a, 180a, 180b, 270a, 370a, 470a, 480, 770 |

S5

S3

**Fig. 4**

Fig. 5a

Fig. 5b

Fig.6a

Fig.6b

Fig. 7

Fig. 8a

Fig. 8b

Fig.9a

Fig.9b

Fig. 10

Fig. 11a

Fig. 11b

**Fig. 11c**

Fig. 12

EP 3 561 381 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060236999 A
- DE 102011002861
- DE 102016215266
- DE 102012203715
- EP 3238599 A
- US 20160109152 A
- EP 2960594 A
- EP 3260796 A
- DE 202012103242
- EP 17188041